# DEMANDE DE BREVET EUROPEEN

(11) **EP 4 742 475 A1**
(43) Date de publication de la demande: **13.05.2026**
(21) Numéro de dépôt: 24211611.9
(22) Date de dépôt: 08.11.2024
(51) Int. Cl.: H02J 1/06, B60L 53/30, H02J 1/10, H02J 3/38, H02M 7/00

(54) **SYSTEME DE CONVERSION D'ENERGIE UNIVERSEL DURABLE**

(71) Demandeur: CE+T Power Luxembourg SA, 9911 Troisvierges (LU)
(72) Inventeur: JOANNES, Thierry, 4400 FLEMALLE (BE); FREBEL, Fabrice, 4020 WANDRE (BE); VANEUKEM, Romain, 4000 LIEGE (BE); THIRION, Pierre, 4120 NEUPRE (BE); BIDAINE, Benoit, 4671 SAIVE (BE)
(74) Mandataire: AWA Benelux

(57) **Abrégé**

La présente invention se rapporte à un module de conversion (1, 1A, 1B, 1C, ...) multiport en électronique de puissance comprenant :
- une pluralité de sous-modules ou éléments (2), chaque sous-module ou élément (2) comprenant un contrôleur local ou de conversion (5) ;
- une structure protectrice dans laquelle les sous-modules (2) sont agencés ;

ledit module de conversion (1) comprenant un contrôleur central ou de module (6) configuré pour échanger des données de contrôle avec les contrôleurs locaux (5) correspondants, ledit contrôleur central (6) étant également agencé dans la structure protectrice ;
chaque sous-module (2) comportant un convertisseur (7), au moins un port externe AC ou DC (3) et un connecteur interne DC, ledit port (3) et ledit connecteur interne DC étant connectés au convertisseur (7) ;
ledit module de conversion (1) comprenant un réseau commun en DC ou pseudo-DC (4, 8) auquel au moins deux des, de préférence tous les, sous-modules (2) sont connectés via leur connecteur interne DC.

## Description

### Objet de l'invention

La présente invention se rapporte à un développement et une conception de systèmes de conversion d'énergie, notamment :
- de sauvegarde (*backup*) et de stockage à différentes fins, comme pour l'interconnexion de sources renouvelables, de véhicules électriques, ou d'autres charges/sources (par exemple pile à combustible, hydrolyseur, micro-turbine),
- comme alimentation de précision d'aimants à destination de la recherche et la médecine, ou alimentation pour la génération d'arcs électriques, etc.,
qui soient aptes à être mis en baies - rackables *(rack-mountable design),* modulaires, évolutifs, faciles d'entretien et robustes.

### Arrière-plan technologique et état de la technique

Dans le contexte actuel du déploiement des énergies renouvelables et de l'électrification prévisible de bon nombre d'usages énergétiques, les besoins d'interconnexion et de conversion électrique sont de plus en plus nombreux et variés.

Ainsi, le marché des systèmes de stockage d'énergie par batterie (BESS) connaît une forte croissance pour répondre aux défis posés par l'intégration des énergies renouvelables dans les réseaux électriques. Dans ce contexte, l'introduction de la flexibilité dans la gestion de la consommation est cruciale pour l'équilibrage et la stabilité des réseaux électriques, tandis que les convertisseurs électroniques de puissance et leur pilotage digital sont essentiels à cette transition énergétique.

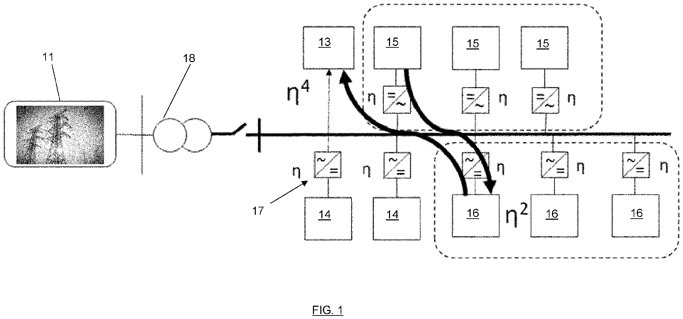

Les besoins précités d'interconnexion et de conversion électrique comprennent notamment une connexion au réseau public ou à un micro-réseau en technologie AC et/ou DC, des équipements de production renouvelables (solaire, éolien), des batteries de stockage, des bornes de recharge pour véhicules électriques ou encore des alimentations sans interruption (UPS) pour charges critiques. Chacun de ces équipements se distingue par des paramètres physiques spécifiques : tension, courant, courbe de puissance, temps de réponse, etc. (voir figure 1).

Il est connu que les conversions multiples en cascade dans les flux d'énergie dégradent le rendement (voir figure 1). Il y a une multitude de fournisseurs en conversion, spécifiques et généralement non compatibles entre eux, sans compter les logiciels. L'installation et la maintenance sont complexes sans préfabrication possible. En outre, dans la plupart des solutions proposées sur le marché, le réseau reste l'élément commun par lequel tous ces flux d'énergie sont transférés. En conséquence, le micro-réseau est dépendant du réseau. En cas de rupture, le passage en mode backup, pour autant qu'il soit possible, ne peut se faire sans au moins une courte interruption de service, ce qui est problématique pour les charges sensibles.

Le document US2023/0327574A1 divulgue un convertisseur modulaire multiniveau et une méthode de synchronisation des sorties des sous-modules du convertisseur. Le convertisseur modulaire multiniveau comprend des sous-modules connectés en parallèle, et chaque sous-module génère une sortie. Le convertisseur modulaire multiniveau comprend également un contrôleur couplé de manière communicative aux sous-modules. Le contrôleur contrôle le flux d'un ou plusieurs signaux de synchronisation entre la pluralité de sous-modules, de sorte que chaque sous-module reçoive simultanément les signaux de synchronisation dans des directions opposées, contrôlant ainsi la synchronisation des sorties générées par les sous-modules.

Le document WO16165718A1 divulgue un système de convertisseur d'une éolienne comportant des contrôleurs pour des onduleurs et un système de traitement d'erreur distribuée ainsi qu'un procédé de commande associé. Les contrôleurs d'onduleur sont reliés par un bus de communication à l'aide d'un ou de plusieurs anneaux de communication. Le bus de communication permet à un mot de contrôle de circuler entre les contrôleurs d'onduleur. Lorsqu'un contrôleur d'onduleur détecte une défaillance d'un onduleur associé, le contrôleur d'onduleur produit un mot de contrôle indiquant la défaillance détectée, le mot de contrôle indicatif de la défaillance détectée circule vers tous les autres contrôleurs d'onduleur sur le bus de communication et les contrôleurs d'onduleur effectuent une action de réponse à la défaillance donnée.

Le document AT501422B1 divulgue un système d'onduleur servant à assurer une alimentation dans un réseau triphasé, indépendamment de l'ensoleillement. Plus l'ensoleillement est important, plus il faut alimenter le réseau triphasé en énergie ou en puissance. C'est pourquoi il convient de combiner les onduleurs individuels en fonction des besoins et de les commuter en parallèle. A cet effet, un onduleur est défini par une unité de commande centrale, selon des critères déterminés, comme onduleur-maitre et tous les autres onduleurs comme onduleurs-esclaves. Les onduleurs monophasés sont également réunis en trois groupes, c'est-à-dire un groupe par phase, ce qui permet d'éviter un déséquilibre de charge des phases.

Le document US10720775B2 divulgue un module de conversion servant à convertir une puissance électrique au moyen d'un circuit de conversion comprenant au moins un commutateur à semi-conducteur faisant appel à des dispositifs électroniques de puissance à commande cadencée. Le module de conversion comprend un boîtier, une première borne de connexion de circuit intermédiaire, ainsi qu'un condensateur disposé dans le boîtier et relié à la première borne de connexion de circuit intermédiaire et au circuit de conversion, ledit condensateur servant à stabiliser une tension continue appliquée sur la première borne de connexion de circuit intermédiaire. Le module de conversion comprend une deuxième borne de connexion de circuit intermédiaire reliée au condensateur et à la première borne de connexion de circuit intermédiaire. La première borne de connexion de circuit intermédiaire et la deuxième borne de connexion de circuit intermédiaire sont destinées à être reliées aux bornes de connexion de circuit intermédiaire d'autres modules de conversion pour convertir une puissance électrique. Un onduleur peut être formé par au moins deux modules de conversion qui sont reliés l'un à l'autre par respectivement une de leurs bornes de connexion de circuit intermédiaire.

Le document US10658844B2 divulgue un système modulaire de conversion d'énergie et d'électronique de puissance permettant à tout dispositif ou entité de production d'énergie de se connecter à toute charge ou réseau électrique, y compris, mais sans s'y limiter, la conversion d'électricité entre un ou plusieurs producteurs de bas niveau tels qu'un générateur diesel ou à gaz, un moteur Stirling, une turbine éolienne ou un réseau photovoltaïque, et un consommateur tel qu'un bâtiment commercial ou résidentiel, soit directement, soit par l'intermédiaire du réseau. Le système modulaire de conversion de l'énergie, y compris l'électronique de puissance matérielle et logicielle, conçu comme un étage de puissance modulaire regroupant différentes entités de production d'énergie, systèmes de transmission, consommation et charges, ainsi que le stockage de l'énergie, est également divulgué.

Le document US2006/0120001A1 divulgue un convertisseur de puissance modulaire qui s'adapte facilement à une grande variété d'applications en séparant les fonctions de conversion de puissance sensiblement constantes des composants du convertisseur de puissance qui sont en grande partie spécifiques à l'application. Un module central de conversion de puissance est fourni, qui comprend les fonctions de conversion et les systèmes thermiques d'un convertisseur de puissance typique. Un connecteur de sortie est adapté pour coupler le module central à un module spécifique à l'application qui peut contenir des composants spécifiques à l'application tels que des magnétiques, des filtres, des contacteurs, des relais, des capteurs de courant, etc. Une armoire facilement reconfigurable est incluse et peut être facilement adaptée à des applications particulières.

Le document EP3333005B1 divulgue une électronique de puissance pour la charge d'au moins un véhicule à propulsion électrique, l'électronique de puissance comprenant au moins deux modules avec chacun au moins une paire de bornes avec sortie DC, au moins un redresseur, au moins une entrée AC, au moins un circuit intermédiaire de tension DC et un certain nombre d'éléments de commutation, les éléments de commutation étant disposés sur et/ou entre les sorties DC des au moins deux modules de telle sorte qu'entre les au moins deux modules, au moins une configuration de circuit série et une configuration de circuit parallèle peuvent être réglées dynamiquement au choix par des fins de commutation appropriées des éléments de commutation.

Le document CN103904912B divulgue un bloc d'électronique de puissance comprenant un boîtier, un module de puissance monté dans le boîtier, un contrôleur monté dans le boîtier et couplé au module de puissance, un condensateur couplé au module de puissance et monté dans le boîtier, une barre de bus AC montée dans le boîtier et une barre de bus DC couplant le condensateur au module de puissance et montée dans le boîtier.

Le document US8848401 B2 divulgue un convertisseur électronique de puissance destiné à être utilisé dans la transmission de courant continu a haute tension avec compensation de puissance réactive, lequel convertisseur comprend au moins une branche de conversion. La ou chaque branche de conversion comprend une première et une seconde borne continue pour la connexion en service à un réseau continu, et une borne alternative pour la connexion en service a un réseau alternatif. La ou chaque branche de conversion définit une première et une seconde section de branche qui sont connectées en série entre la borne alternative et l'une respective des première et seconde bornes continues. Chaque section de branche comprend un convertisseur chaîne qui est connecté en série avec au moins un élément de commutation primaire. Chaque convertisseur chaîne comprend une pluralité de modules qui sont connectés en série et chaque module comprend au moins un élément de commutation secondaire qui est connecté a au moins un dispositif de stockage d'énergie. Le ou chaque élément de commutation primaire, sur chaque section de branche d'une branche de conversion respective, définit de manière sélective un trajet de circulation qui transporte un courant continu afin de réguler le niveau d'énergie d'au moins un dispositif de stockage d'énergie dans un convertisseur chaîne respectif.

Le document US9516761 B2 divulgue un procédé d'encapsulation de panneaux de composants électroniques, tels que des convertisseurs de courant, qui réduit la surface perdue d'une carte a circuits imprimés. Après encapsulation, le panneau, qui peut comporter une pluralité de composants, peut être découpé en une ou plusieurs parties distinctes. Le moule peut servir à former une partie du produit fini, par exemple pour obtenir des ailettes de dissipateur de chaleur ou une surface soudable montée en surface. Des éléments d'interconnexion situés le long des bords des circuits individuels sont exposés pendant le processus de séparation, ce qui forme des connexions électriques aux composants sans gaspiller une surface utile de la carte à circuits imprimés. Les moules peuvent comporter divers éléments internes, tels des éléments d'alignement positionnant précisément la carte à circuits imprimés à l'intérieur de la cavité du moule, des contours de verrouillage assurant l'intégrité structurale du module séparé, des contours permettant de mettre en correspondance les formes et les tailles des composants, ce qui améliore la dissipation de chaleur à partir des composants internes et réduit le volume d'agent d'encapsulation requis, des canaux de dégagement assurant un espacement préconisé par les agences de sécurité, ainsi que des retraits destinés aux interconnexions. Après encapsulation, il est possible de pratiquer de larges découpes dans les moules, ce qui réduit les contraintes thermiques et diminue l'épaisseur du matériau à découper au cours de la séparation ultérieure. Les éléments externes du moule peuvent présenter diverses configurations d'ailettes de dissipateurs de chaleur, des surfaces plates permettant un montage ou un soudage en surface, etc. Des panneaux de moule d'ébauche peuvent être usinés de façon à obtenir certains ou l'ensemble des éléments susmentionnés dans un système de fabrication à la demande. Des adaptateurs de connexion peuvent être installés pour utiliser les modules dans des positions de montage verticales ou horizontales, selon des variantes de soudage sur un connecteur, dans un trou traversant ou par montage en surface. Les interconnexions peuvent être plaquées de manière à obtenir un module connectorisé susceptible d'être inséré dans un connecteur homologue. Il est possible de remplacer les panneaux de dissipateur de chaleur par des plaques réutilisables. En variante, le panneau peut être encapsulé dans un moule réutilisable puis en être séparé après durcissement.

Le document US10381924B2 concerne un appareil de conversion de courant électrique qui comprend un convertisseur ayant un circuit de régulation et un réseau de commutation. Le circuit de régulation possède des éléments de stockage magnétique et des commutateurs qui sont connectés aux éléments de stockage magnétique et qui peuvent être commandés pour commuter entre des configurations de commutation. Le circuit de régulation maintient un courant continu moyen traversant un élément de stockage magnétique. Le réseau de commutation comprend des éléments de stockage de charges connectés à des commutateurs qui peuvent être commandés pour commuter entre plusieurs configurations de commutation. Dans une configuration, les commutateurs forment un agencement d'éléments de stockage de charges dans lequel au moins un élément de stockage de charges est chargé à l'aide de l'élément de stockage magnétique par le port d'entrée ou de sortie du réseau. Dans une autre configuration, les commutateurs forment un agencement d'éléments de stockage de charges dans lequel un élément se décharge en utilisant un élément de stockage magnétique, par un port d'entrée ou un port de sortie du réseau de commutation.

### Buts de l'invention

La présente invention vise à développer une plateforme de conversion et de gestion de flux énergétiques, ouverte, évolutive, offrant flexibilité et optimisation du rendement, pour répondre aux multiples applications et différents marchés en accélérant le processus de développement et le « time-to-market ».

L'invention vise particulièrement à développer une solution microréseau de conversion et de gestion des flux d'énergie installée BTM (*Behind The Meter*)*,* avec génération d'énergie et stockage du côté consommateur, tel que solaire résidentiel, batteries, générateur diesel, proposant une approche modulaire et flexible pour répondre à divers besoins et environnements électriques et utilisant une architecture modulaire, en vue d'améliorer l'efficacité énergétique, réduire les coûts et offrir une solution polyvalente et adaptable aux différentes situations pouvant être rencontrées dans une structure de micro-réseau.

Un objectif principal de l'invention est de permettre aux utilisateurs de la gamme 10kW-500kW/2MW (BTM) d'avoir une maîtrise totale de leur consommation et production, quel que soient le type de charge ou de source, dans un contexte où la disponibilité du réseau électrique n'est pas garantie.

### Principaux éléments caractéristiques de l'invention

Un premier aspect de la présente invention se rapporte à un module de conversion multiport en électronique de puissance comprenant :
- une pluralité de sous-modules ou éléments, chaque sous-module ou élément comprenant un contrôleur local ou de conversion ;
- une structure protectrice dans laquelle les sous-modules sont agencés ;

ledit module de conversion comprenant un contrôleur central ou de module configuré pour échanger des données de contrôle avec les contrôleurs locaux correspondants, ledit contrôleur central étant également agencé dans la structure protectrice ;
chaque sous-module comportant un convertisseur, au moins un port externe AC ou DC et un connecteur interne DC, ledit port et ledit connecteur interne DC étant connectés au convertisseur ;
ledit module de conversion comprenant un réseau commun en DC ou pseudo-DC auquel au moins deux des, de préférence tous les, sous-modules sont connectés via leur connecteur interne DC.

Selon des formes d'exécution préférées de l'invention, le module de conversion comporte en outre au moins une des caractéristiques suivantes :
- au moins deux sous-modules sont configurés de sorte à ne pas échanger de données de contrôle via leurs contrôleurs locaux respectifs, le contrôle étant alors centralisé via le contrôleur central ;
- les sous-modules sont amovibles ;
- chaque module de conversion comprend un châssis auquel chaque sous-module est fixé ;
- au moins deux sous-modules sont configurés de sorte à être reliés l'un à l'autre par des fixations mécaniques et connexions électriques ;
- les fixations mécaniques sont de type rapide et les connexions électriques sont des câbles ou jeux de barres ;
- chaque sous-module comprend une interface comprenant des terminaux assurant le transfert des données de contrôle entre le contrôleur local correspondant et le contrôleur central du module lorsque ledit sous-module est agencé dans le module, les interfaces respectives étant indépendantes les unes des autres.

Un second aspect de la présente invention concerne un système de conversion d'énergie en électronique de puissance comprenant au moins deux modules de conversion, un premier module conversion et un deuxième module de conversion, selon l'une quelconque des revendications précédentes, caractérisé en ce que le contrôleur central du premier module et le contrôleur central du deuxième module communiquent par une liaison pour échanger des données de gestion du système.

Selon des formes d'exécution préférées de l'invention, le système de conversion d'énergie comporte en outre au moins une des caractéristiques suivantes :
- il comprend un contrôleur système pour le pilotage global d'une station énergétique comprenant ledit système ;
- il comprend au moins une armoire ou une baie standardisée configurée pour accueillir un ou plusieurs modules de conversion rackables ;
- il comprend pour chaque module une carte de fond de panier attachée à l'armoire pour un contrôle de position de chaque module et la détection instantanée d'une déconnexion ou mauvaise connexion d'un module, le contrôleur dudit module s'interconnectant avec la carte de fond de panier pour une communication digitale entre les modules ;
- chaque module de conversion est parallélisable avec un ou plusieurs autres modules de conversion ;
- chaque module de conversion comprend au moins deux ports et de préférence 3 ports ou plus ;
- le système est équipé d'un système de refroidissement à eau ou à air, air forcé ou naturel, le cas échéant de type diphasique avec récupération de chaleur ;
- le système couvre une gamme de moyenne puissance comprise entre 5kW et 20MW et de préférence entre 20kW et 200kW.

Le document US10658844 est considéré comme étant le document le plus proche de la présente invention car il divulgue la présence de sous-modules comportant chacun un convertisseur qui est reliée à un bus DC commun à tous les sous-modules. Tous les sous-modules comportent une unité de contrôle. Ce document divulgue aussi une structure protectrice dans laquelle les sous-modules sont agencés, ainsi qu'un contrôleur central adapté pour communiquer des données de contrôle aux contrôleurs locaux. Toutefois il n'est pas prévu que plusieurs modules communiquent entre eux.

### Brève description des figures

La figure 1 représente schématiquement une solution type en micro-réseau (BTM), avec un exemple de dégradation des rendements sur flux d'énergie.
La figure 2 représente un exemple de deux modules multiport assemblés à partir d' « éléments », selon la présente invention.
La figure 3 représente un exemple de système rackable et modulable en structure de micro-réseau indépendant, toujours selon l'invention.
La figure 4 représente schématiquement les « éléments » en AC et en DC (par analogie avec le système de briques Lego^{®}).

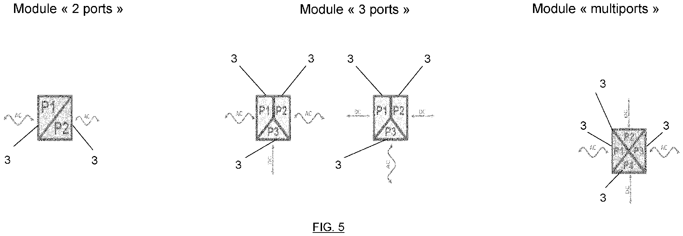

La figure 5 représente schématiquement la création de modules multiport rackables sur la base d'éléments précités.
La figure 6 représente schématiquement la création d'un système par empilement de modules rackables.
La figure 7 montre la schématisation du contrôle multiniveaux système/module/convertisseur dans le cas d'une plateforme modulaire à modules parallélisés.

### Description détaillée de l'invention

Le projet selon la présente invention, au départ d'une expertise en conception de systèmes de conversion d'énergie rackables et modulaires, évolutifs, faciles à entretenir et robustes, vise à développer une plateforme de conversion de puissance comprenant des unités ou sous-ensembles de type briques Lego^{®}, également rackable et modulaire.

Dans l'esprit de l'invention, la modularité est la mise en série ou en parallèle de convertisseurs de puissance rackables. Il sera donné ci-dessous la vision des inventeurs quant à la notion de mise en armoire aisée (rackable) selon la présente invention.

Dans la présente demande, on entend par unité ou sous-ensemble de type briques Lego^{®}, une unité ou sous-ensemble qui puisse s'emboîter dans une autre unité ou un autre sous-ensemble de même type, par exemple mais pas exclusivement au moyen de protubérances et cavités correspondantes, tout autre moyen d'attache rapide entre deux unités étant envisagé selon la présente invention. L'analogie peut s'étendre aussi bien sûr au-delà du domaine mécanique, comme le concept de lier des briques de type différent (ex. DC/DC et DC/AC) via des liens communs (ex. DC commun pour l'énergie, contrôleur module pour la communication).

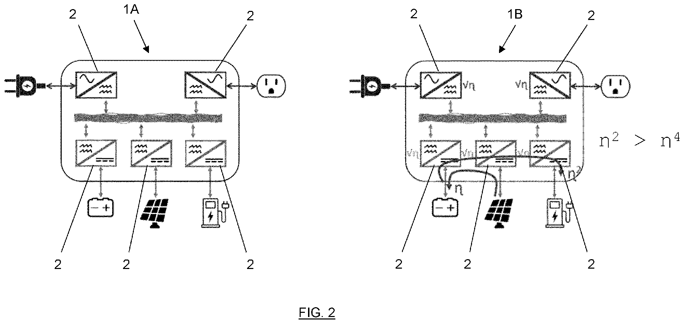

Le module convertisseur de puissance multiport (« hybride ») connu de l'état de la technique est transformé et adopté selon l'invention selon un assemblage modulaire 1 subdivisé en deux, trois ou quatre cartes-convertisseurs élémentaires 2 (voir figure 2). Cette approche permet de construire divers modules hybrides avec un nombre limité d'« éléments », en limitant l'effort de développement et en réalisant des économies d'échelle. La plateforme est ainsi évolutive. Selon l'invention, on pourrait avoir avantageusement un nombre maximal d'éléments allant au moins jusqu'à 6 par module et un nombre maximal de modules allant au moins jusqu'à 100.

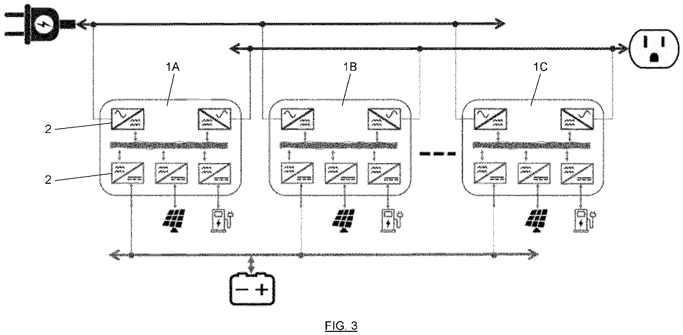

L'architecture envisagée selon l'invention maintient le principe d'une structure rackable et modulaire (voir figure 3).

Les objectifs recherchés incluent un rendement amélioré (-99%), une grande densité de puissance (en W/cm³), de grandes plages de tensions de fonctionnement, une capacité de conversion bidirectionnelle et de multiples modes de fonctionnement. Les flux d'énergie sont échangés à l'intérieur du module, directement entre les étages primaires de conversion, réduisant le nombre de conversions et les pertes associées, ce qui améliore considérablement le rendement global (voir figure 2). Ainsi chaque transfert s'effectue sur deux étages au lieu de quatre (rendement de 98% par transfert ou convertisseur). Pour un cycle génération/stockage/usage, on a un rendement total de 96% au lieu de 92% selon l'état de la technique.

Le système est conçu pour fonctionner de manière intégrée de préférence sans recourir à plusieurs fournisseurs et/ou à des logiciels complexes, et ouvre la voie à des solutions préfabriquées sans avoir recours à un personnel qualifié pour l'installation sur site.

Les transferts d'énergie se font ainsi sans passer par le réseau (général), rendant le micro-réseau créé totalement indépendant. Cela permet un passage instantané en mode backup, sans interruption. La puissance installée vue par le réseau est réduite à celle de l'étage connecté (voir figure 2), contrairement aux solutions traditionnelles où le réseau voit la somme des puissances des équipements (voir figure 1). Cette différence est significative et essentielle pour le gestionnaire de réseau de distribution (GRD) en termes de perturbations potentielles.

Selon une forme d'exécution particulière, l'optimisation du rendement et certains cas d'usage nécessitent un fonctionnement en environnement clos, sans ventilation forcée.

Avantageusement, l'architecture modulaire proposée sera extrêmement flexible. Bien qu'il soit relativement aisé de garantir le fonctionnement de chaque élément de base selon sa fiche technique, il est a priori très difficile d'anticiper la stabilité du système pour toutes les combinaisons d'assemblages, modes de fonctionnement et environnements possibles. C'est pourquoi des modèles numériques sont développés dès le début du projet, avec une approche structurelle et systématique.

Les étapes clés incluent :
- développer des modèles pertinents pour les modules ;
- créer une méthodologie de modélisation et d'identification des paramètres des systèmes externes et environnements électriques multiples auxquels les modules seront connectés. Souvent, des modèles de type "boîte noire" seront nécessaires ;
- proposer des algorithmes de contrôle adéquats pour les modules créés.

Avantageusement, l'architecture sera transparente pour l'utilisateur et la mise en oeuvre doit pouvoir être réalisée par du personnel peu qualifié. Les cas d'applications, les environnements électriques et leur évolution sont difficilement prévisibles. Des outils de simulation seront adaptés pour créer des assistants (*Wizards*) facilitant la paramétrisation et l'optimisation sur site.

### Description de formes d'exécution préférées de l'invention

### Préambule lexical

Le présent lexique vise à clarifier et à définir des termes spécifiques qui seront utilisés pour décrire les éléments du projet. Comprendre ces termes est essentiel pour saisir les nuances et les complexités des systèmes de conversion d'énergie modernes, qui jouent un rôle crucial dans diverses applications allant des data centers aux micro-réseaux.

**Port 3** : toute connexion exploitable d'un convertisseur est appelée « port ». Le plus souvent un convertisseur est connecté à une source et à une charge : il s'agit alors d'un convertisseur « 2 ports ». Les convertisseurs « 3 ports » sont également courants. Exemples de convertisseur 2 ports : redresseur, chargeur VE, onduleur, onduleur PV, onduleur support réseau, convertisseur DC/DC uni- ou bidirectionnel. Exemples de convertisseur 3 ports : alimentation de secours, onduleur télécom, onduleur PV hybride, onduleur support réseau hybride, micro-réseau DC & AC appliqué aux charges critiques.

**Elément 2** : un convertisseur « 2 ports » est constitué de deux étages primaires, un étage d'entrée et un étage de sortie. Ils sont reliés entre eux par une réserve d'énergie temporaire non directement exploitable. On désignera par « *élément* » un étage de conversion simple, bidirectionnel, rendu autonome et intelligent, comportant au minimum deux ports dont l'un des *ports* fournit une tension qui sera désignée par *pseudo-DC* (voir ci-dessous). Par élément, on pourra avoir par exemple jusqu'à 4 ports (cas : DC, L1, L2, L3).

**Module 1** : conformément à la littérature et au langage vernaculaire propres à l'électronique de puissance, un module est un convertisseur qui transforme l'énergie d'une source en une énergie électrique utilisable. Il peut s'agir d'une conversion de tension ou de courant. On y ajoutera typiquement d'autres fonctions telles que le filtrage, l'ajustement de l'intensité, la redirection du flux, etc. Il sera typiquement piloté par un logiciel. On parlera ici principalement de modules rackables et parallélisables. Dans l'esprit de l'invention, un module sera constitué de plusieurs éléments (jusqu'à 6, comme déjà mentionné). Les éléments et en particulier les ports peuvent être combinés en parallèle, série ou série/parallèle.

**Isolation** : on parle d'isolation galvanique entre deux circuits électriques ou électroniques, le fait qu'il n'y ait aucune liaison conductrice tel que fil électrique, châssis métallique, etc., entre ces deux circuits. On la représentera par une ligne double dans les schémas, comme cela est d'usage.

**Pseudo-DC 4 :** on désignera par pseudo-DC une entrée/sortie de tension contrôlée mais non régulée telle qu'on la retrouve sur les étages intermédiaires des convertisseurs de puissance. Un port pseudo-DC est voué à rester interne au module. C'est un noeud de connexion entre les différents éléments. Pour ce type de port, les fonctions suivantes ne sont pas nécessaires : connexion de puissance « hot plug », système de précharge, système de protection contre les sur-courants ou surtensions et mesure de courant directe, ce qui représente des économies potentielles.

**Système 10** : on désignera par ce vocable un assemblage de *modules* dont les caractéristiques sont propres à gérer l'énergie pour une application sur site en fonction des besoins spécifiques de celle-ci.

**PUE (Power Usage Effectiveness)** : le PUE est un indicateur permettant de mesurer l'efficacité énergétique d'un data center. Par extension, on l'appliquera à un système quelconque, par exemple à un micro-réseau. Le PUE évalue le rendement en faisant un ratio de l'énergie utilisée globalement, sur l'énergie réellement utilisée dans l'application.

Les éléments (convertisseurs) que l'on peut trouver dans l'état de l'art sont par exemple le convertisseur isolé bidirectionnel via transformateur haute fréquence (spécialement DC/DC), le convertisseur non isolé bidirectionnel DC/DC (optimum de rendement avec DC/DC de type Buck), le convertisseur isolé bidirectionnel DC/AC, le convertisseur non isolé bidirectionnel DC/AC (pour batterie, panneau PV, turbine, etc.) et autres éléments de conversion non isolés.

Les topologies « module » présentes dans l'art antérieur sont par exemple le redresseur isolé (AC/DC non isolé combiné avec un DC/DC isolé ; 2 étages, 2 ports), une topologie DC/DC Buck/Boost bidirectionnelle (2 DC/DC non isolés ; 2 étages, deux ports, V_port1>V_port2 et tension intermédiaire > V_port1 et V_port2), un onduleur solaire (combinaison d'un ou plusieurs DC/DC non isolés combiné(s) à un DC/AC non isolé unique ; 2 étages, 2 ports), un onduleur solaire hybride PV/batterie (combinaison d'un ou plusieurs DC/DC non isolés combiné(s) à un DC/AC non isolé unique (côté réseau) et à un DC/DC non isolé bidirectionnel unique pour la connexion batterie ; 2 étages, 3 ports).

### La structure et le pilotage de l'innovation

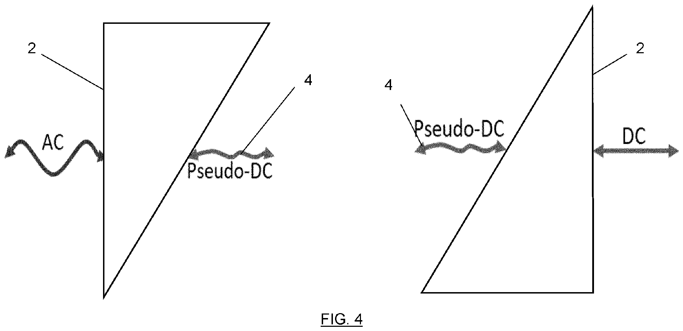

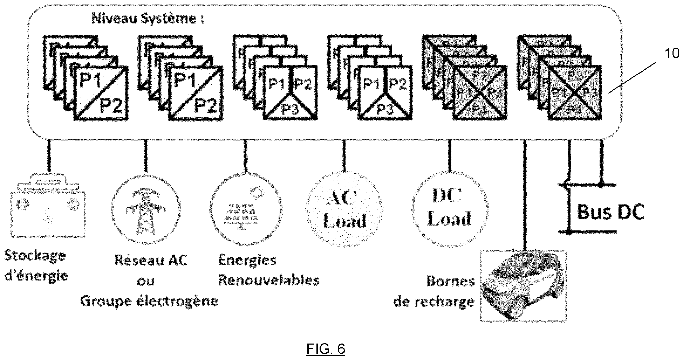

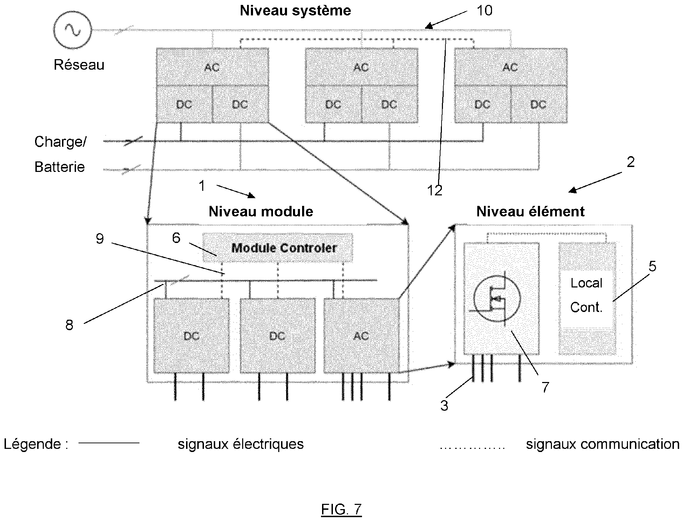

L'objet de l'invention est de créer une *architecture* basée sur des *éléments de conversion* (voir figure 4) que l'on pourra assembler à l'envi, par exemple en atelier, à l'instar des briques Lego^{®}, pour constituer des *modules* qui seront une unité commercialisable, ces derniers étant eux-mêmes assemblés en systèmes (voir figures 6 et 7) utilisés pour la gestion de l'énergie en vue d'optimiser le *PUE* dans les micro-réseaux, les data centers, etc.

Dans tous les *modules* existants sur le marché et dans l'état de l'art, le contrôle est unique et globalisé sur tous les *ports* présents (2 ports ou 3 ports). Cela facilite grandement le pilotage du bilan énergétique à somme nulle. L'inconvénient est que chaque module de l'état de l'art est figé dans ses caractéristiques limitant son usage à une gamme restreinte d'équipements.

Grâce à la structure hiérarchique proposée selon l'invention, les microcontrôleurs 5 dans les *éléments* 2 ne sont liés qu'au contrôleur *module* 6. Ils ne communiquent pas directement entre eux bien qu'ils fonctionnent de manière parfaitement cohérente et coordonnée. En outre, ils concentrent une grande quantité de calculs et de tâches déchargeant d'autant le rôle du contrôleur *module 6.* La situation est plus complexe au départ mais aussi plus flexible. Par exemple, selon l'invention, créer un nouveau *module* 6 avec un nombre inédit ou quelconque de *ports* 3 sera simple et rapide. La parallélisation de *modules* 6 est généralement opérationnelle dans l'état de l'art tant que le réseau électrique est présent et sur leur *port* AC uniquement. Il n'existe pas à notre connaissance de *modules* parallélisables et rackables à plus de 3 *ports.* On trouve de multiples onduleurs hybrides qui sont des *modules* « 3 ports. Les UPS modulaires sont des *modules* 3 ports. Ils sont rackables et parallélisables mais très peu sont multidirectionnels.

En termes d'électronique de puissance, les MOSFETs SiC et GaN seront utilisés pour augmenter la fréquence des commutations (typiquement 140kHz) et améliorer la densité et le rendement, tout en restant économiquement viables. On visera un équilibre intrinsèque des puissances, de préférence avec un écart inférieur à 500W, soit <2,5%.

Avantageusement, la brique AC/pseudo-DC sera conçue pour être compatible avec différentes configurations électriques (tri-, bi-, monophasé), avec possibilité de mise en parallèle (et dans certains cas en série - convertisseurs isolés), avec une large plage de tension en entrée et en sortie, min. +/-30% de la tension nominale (adaptée aux standards US et internationaux), avec ou sans neutre. La plage de tension peut être plus grande mais avec un déclassement de puissance. Les éléments assureront la bidirectionnalité des flux d'énergie. Les éléments seront conçus de manière à obtenir de faibles émissions électromagnétiques.

Encore avantageusement, l'accent sera mis sur une réduction drastique des pertes à vide ou faible charge (<0,1% Pnom). Outre l'optimisation des flux d'énergie, l'amélioration du *PUE* passe par la mise hors service d'équipements, de *modules,* en période de basse utilisation. Ultérieurement des techniques d'IA seront incorporées pour définir judicieusement quand et comment des « phases de sommeil » seront activées/désactivées. Pratiquement, les développements doivent inclure un mode basse consommation.

Comme il est connu de l'état de la technique du refroidissement, le système de refroidissement pour évacuer la chaleur produite par les éléments sera liquide ou à air, par exemple à air forcé ou encore de préférence à circulation naturelle, le cas échéant en technologie diphasique avec récupération de la chaleur fatale pour des applications diverses telles que production d'électricité ou chauffage de l'eau.

Les *systèmes* 10 issus de la plateforme créée selon l'invention intègrent toutes ces caractéristiques et n'ont pas d'équivalent dans l'état de la technique actuelle.

Les étapes de développement de l'invention sont les suivantes :
- rendre indépendante et autonome *l'élément de conversion* :
   - intégrer un contrôle local via µC muni de fonctions DSP (Digital Signal Processing) opérant à très grande vitesse (par ex. 140KHz) ;
   - intégrer une alimentation locale ;
   - construire une pièce aisément manipulable en atelier et sans risque de dommages ;
   - définir des interfaces (puissance et communication) suffisamment robustes pour permettre la création de futurs *éléments de conversion* compatibles et cohérentes avec le fonctionnement du *module ;*
   - intégrer les filtres EMC ;
   - certifier *l'élément de conversion* en tant que tel pour simplifier la certification des modules et des systèmes.
- créer une structure mécanique protectrice pour le *module* facilement intégrable en armoire (rackable) ;
- créer le contrôleur *module* (figure 7) qui pilote et synchronise les µC des *éléments de conversion :*
   - calculer en permanence le bilan énergétique des entrants et sortants du module pour garantir une somme nulle même et en dépit des impacts de charge (variations transitoires brutales) ;
   - recevoir et interpréter les instructions émanant du niveau système ;
   - synchroniser les *ports* pour satisfaire les impératifs de load sharing, de tolérance de panne, de synchronisme, de phasage, etc. ;
   - communiquer à haute vitesse (par ex. 10KHz) avec les microcontrôleurs (µC) des *éléments de conversion ;*
- concevoir un banc de test universel pour les éléments permettant en plus une programmation et une calibration automatiques.

Concernant la notion de modules facilement intégrables en armoire (rackable), de préférence en empilement vertical dans une baie standardisée 19 pouces, celle-ci ne va pas de soi et nécessite, selon l'invention, la mise en oeuvre d'une série de moyens techniques permettant une intégration aisée et rapide : des moyens mécaniques pour une fixation standardisée (connus en soi de l'homme de métier), de préférence des moyens de fixation rapide (écrous papillon, attaches à clip, rivets pop, etc.), un contrôle de position de chaque module via une carte de fond de panier attachée à l'armoire, des câbles et/ou des busbars pour connecter les éléments, etc.

Le principe du contrôle de la plateforme est décrit ci-dessous (figure 7).

Chaque *élément* exerce, via un contrôleur dédié de bas niveau 5, un contrôle intelligent des PWM à grande vitesse (<0,5ms) en pleine autonomie et en ignorant le contrôle exécuté par les autres éléments insérées dans le même *module.* Le contrôle est exercé dans la perspective du fonctionnement combiné des éléments, de la flexibilité et de l'évolutivité de la plateforme et de leur fonction par rapport à l'équipement connecté. La seule donnée externe est constituée par les instructions en provenance du contrôleur du *module.*

Le contrôleur du *module* 6 assure les fonctions suivantes :
- une balance des puissances entre les différents *éléments* tout en assurant les fonctions de parallélisation (ou mise en série) entre *modules,* dans la perspective d'une intégration des *éléments* dans une structure plus large et dans le respect des contraintes typiques telles que redondance « fail safe », impacts de charge, etc. ;
- une stabilisation de la tension "pseudo DC" commune à tous les éléments tout en faisant respecter les contraintes avec leurs priorités respectives ;
et en particulier :
- une communication redondante entre les modules via un bus avec synchronisation intégrée (par ex. via RS-485, 2 Mb/s) : cette fonction assure une communication fiable entre les modules, même en cas de défaillance, grâce à un bus redondant synchronisé ;
- une communication maître avec les contrôleurs d'éléments (par ex. via RS-422, 6x 6 Mb/s) : gestion de la communication principale avec les contrôleurs des différents éléments via plusieurs lignes de communication à haut débit ;
- un contrôle du flux d'énergie pour gérer un bus « pseudo-DC » +/-465Vdc (« Vtank ») : permet de contrôler et réguler le flux de puissance sur le bus d'alimentation pour assurer un fonctionnement stable ;
- une gestion de la machine d'états (« comportement ») du module et des alarmes : assure la gestion de l'état opérationnel du module et supervise la génération et le traitement des alarmes ;
- une limitation de puissance/courant (utilisateur, déclassement thermique, interaction avec le réseau) : impose des limites sur la puissance et le courant en fonction des besoins de l'utilisateur, des contraintes thermiques et des interactions avec le réseau électrique ;
- une connexion Ethernet : permet une communication via Ethernet, notamment pour des applications de surveillance et de contrôle à distance via des protocoles de gestion d'énergie comme MQTT ;
- des fonctions auxiliaires (EEPROM, système de fichiers, diagnostic, mise à jour logicielle, etc.) : inclut diverses fonctions secondaires telles que le stockage de données dans l'EEPROM, la gestion des diagnostics et la mise à jour logicielle.

Toutefois, jusqu'ici, le contrôleur du module opérait de manière classique en pilotant simultanément tous les étages de conversion. Les difficultés nouvelles sont les suivantes :
- une décentralisation des tâches vers les microcontrôleurs des *éléments ;*
- une grande vitesse d'exécution et de transmission pour faire face aux transitoires, en particulier dans un contexte multiport et avec une concentration de puissance considérable ;
- la définition d'un mode opératoire suffisamment robuste pour soutenir sans ajustements l'introduction de nouveaux éléments, et préserver ainsi la rétrocompatibilité ;
- figer au plus tôt les firmware pour répondre aux exigences des organismes de certification qui intègrent le code dans le protocole de certification et imposent la re-certification après tout changement.

Le stockage interne d'énergie présent à l'articulation des étages (dans le cas présent entre les *éléments*) est indispensable pour assurer une réponse correcte aux transitoires (impacts de charge, perturbation du réseau ou de la sources, etc.). Toutefois ce stockage constitue aussi un coût et une source de pertes. Sa taille sera d'autant réduite que la vitesse de contrôle des flux de puissance au sein du module est performante sans qu'il puisse exister une formule mathématique qui permette de déterminer la taille optimale de ce stockage. En outre la taille de ce stockage devra être tel qu'il maintient l'interopérabilité des *éléments.*

Le contrôle système intrinsèque de cohérence de fonctionnement est assuré entre les différents niveaux (non représenté). Le contrôle d'un système constitué de convertisseurs et leur environnement étant organisé en couches imbriquées, la flexibilité dans la configuration des convertisseurs amène une complexité « combinatoire ». Il faudra donc s'assurer que les algorithmes de contrôles à tous les niveaux soient interopérables ou à tout le moins capables de détecter une impossibilité de faire fonctionner le système dans une configuration donnée (par exemple si aucun convertisseur n'est configuré en balance de puissance, il n'est pas possible de faire fonctionner le système).

Créer une nouvelle *brique de conversion* 2 (par exemple pour piloter une éolienne ou une micro-turbine) est simple et rapide et permettra de créer des nouveaux systèmes compatibles sans remettre en cause les autres composants de l'ensemble.

Notons que la structure visée s'affranchit du réseau électrique et gère les flux en interne au travers des connexions « pseudo-DC » 4 entre les *éléments,* un atout considérable qui devrait ravir les gestionnaires des réseaux électriques mécontents des nombreuses nuisances générées par les équipements décentralisés.

### Intégration en armoire des modules

Selon une forme d'exécution, une carte de fond de panier (« backplane ») est fournie sous forme d'une petite carte d'interconnexion placée au niveau de chaque berceau recevant un module dans l'armoire de conversion de puissance. Il y en a donc autant que de modules que l'on peut insérer dans une même armoire. Ces cartes « backplanes » sont fixes dans le système et sont interconnectées entre-elles via un câble plat à 16 fils permettant une communication digitale entre les modules. Lorsqu'un module est inséré dans une armoire, la carte de contrôle module s'interconnecte avec la carte « backplane » et la communication entre modules est alors possible via les bus de communication A et B en RS485 isolé, protocole de communication propriétaire de la Demanderesse.

Cette carte permet d'autres fonctionnalités et agit comme un lien vers le monde extérieur :
- port Ethernet : idéal pour interfacer le monitoring et contrôle externe ; la communication peut se faire avec chaque module ou avec un module master (une carte d'interfaçage est présente dans chaque module) ;
- entrées/sorties digitales : permet la connexion vers un bouton d'arrêt d'urgence, des alarmes ou contrôles divers de contacts isolés ;
- détection de la position hardware du module dans l'armoire et le système. Cette fonctionnalité est nouvelle dans les systèmes proposés par la Demanderesse et permettra au module de reconnaître automatiquement sa fonctionnalité dans le système grâce à la reconnaissance de sa position. Cela facilitera la mise en service et remplacement de modules défectueux par le technicien et évitera ainsi toute erreur de configuration liée à la position du module ;
- détection instantanée de la déconnexion ou mauvaise connexion du module dans le système. Cela aide à l'arrêt du transfert de puissance si la connexion n'est pas parfaite. Finalement, cela conduit à réduire fortement la formation éventuelle d'arcs électriques lors de l'extraction du module en dehors du système. Cette fonctionnalité très utile afin de garantir le « hotplug » des modules en toute sécurité.

Pour ce faire, un petit processeur à bas prix a été intégré qui comprend une mémoire interne, différentes E/S digitales et un port de communication. Ce microprocesseur n'est alimenté que lorsque le module est inséré. C'est alors la carte du contrôleur de module qui lui fournira son énergie via une tension +3V3.

### EXEMPLE

Un exemple d'application de la présente invention est un système d'énergie de moyenne puissance, typiquement 5-200 kW, mais également capable d'être compétitif jusqu'à 20MW en parallélisant une centaine de modules, chaque module pouvant aller jusqu'à 60kW, voire 120kW ou même 200kW max, constitué :
- de convertisseurs électroniques de puissance modulaires (~20 kW/élément) multiports, rackables, parallélisables, à la densité et au rendement optimisés, et hautement configurables (adaptation à différents actifs avec leurs caractéristiques techniques propres) ;
- d'un contrôleur industriel capable de communication digitale avec au moins un module (qui joue le rôle de lui exposer le système complet), les autres équipements locaux (batteries, appareils de mesures, etc.), connecté au réseau Internet (IOT, Building Management System, Energy Management System distant, gestionnaires de réseau, etc.) et hautement configurable (librairie de contrôle, interface de programmation, etc.) ;
- d'un système de refroidissement, avec comme variante un refroidissement avec récupération de chaleur, permettant d'évacuer ou valoriser la chaleur produite par les éléments à convertisseur.

### Symboles de référence

- 1, 1A, 1B, 1C: module
- 2: sous-module ou élément de conversion
- 3: port
- 4: pseudo-DC (tension)
- 5: contrôleur d'élément
- 6: contrôleur de module
- 7: convertisseur
- 8: réseau DC ou pseudo-DC
- 9: liaison/interface contrôleur module-élément
- 10: système
- 11: réseau général
- 12: liaison de contrôle entre modules
- 13: charge AC (maison)
- 14: charge DC (véhicule électrique, téléphone portable)
- 15: ressource énergie renouvelable (éolien, solaire, biomasse)
- 16: système de stockage d'énergie (batterie, turbinage, thermique)
- 17: convertisseur
- 18: transformateur abaisseur de tension

## Revendications

1. Un module de conversion (1, 1A, 1B, 1C, ...) multiport en électronique de puissance comprenant :
- une pluralité de sous-modules ou éléments (2), chaque sous-module ou élément (2) comprenant un contrôleur local ou de conversion (5) ;
- une structure protectrice dans laquelle les sous-modules (2) sont agencés ;
ledit module de conversion (1) comprenant un contrôleur central ou de module (6) configuré pour échanger des données de contrôle avec les contrôleurs locaux (5) correspondants, ledit contrôleur central (6) étant également agencé dans la structure protectrice ;
chaque sous-module (2) comportant un convertisseur (7), au moins un port externe AC ou DC (3) et un connecteur interne DC, ledit port (3) et ledit connecteur interne DC étant connectés au convertisseur (7) ;
ledit module de conversion (1) comprenant un réseau commun en DC ou pseudo-DC (4, 8) auquel au moins deux des, de préférence tous les, sous-modules (2) sont connectés via leur connecteur interne DC.

2. Le module de conversion (1, 1A, 1B, 1C, ...) selon la revendication 1, **caractérisé en ce qu'**au moins deux sous-modules (2) sont configurés de sorte à ne pas échanger de données de contrôle via leurs contrôleurs locaux (5) respectifs (5), le contrôle étant alors centralisé via le contrôleur central (6).

3. Le module de conversion (1, 1A, 1B, 1C, ...) selon la revendication 1, **caractérisé en ce que** les sous-modules (2) sont amovibles.

4. Le module de conversion (1, 1A, 1B, 1C, ...) selon la revendication 1, **caractérisé en ce que** chaque module de conversion (1, 1A, 1B, 1C, ...) comprend un châssis auquel chaque sous-module (2) est fixé.

5. Le module de conversion (1, 1A, 1B, 1C, ...) selon la revendication 1, **caractérisé en ce qu'**au moins deux sous-modules (2) sont configurés de sorte à être reliés l'un à l'autre par des fixations mécaniques et connexions électriques.

6. Le module de conversion (1, 1A, 1B, 1C, ...) selon la revendication 5, **caractérisé en ce que** les fixations mécaniques sont de type rapide et les connexions électriques sont des câbles ou jeux de barres.

7. Le module de conversion (1, 1A, 1B, 1C, ...) selon la revendication 1, **caractérisé en ce que** chaque sous-module (2) comprend une interface (9) comprenant des terminaux assurant le transfert des données de contrôle entre le contrôleur local (5) correspondant et le contrôleur central (6) du module (1, 1A, 1B, 1C, ...) lorsque ledit sous-module (2) est agencé dans le module (1, 1A, 1B, 1C, ...), les interfaces respectives (9) étant indépendantes les unes des autres.

8. Un système de conversion d'énergie (10) en électronique de puissance comprenant au moins deux modules de conversion, un premier module conversion (1A) et un deuxième module de conversion (1B), selon l'une quelconque des revendications précédentes, **caractérisé en ce que** le contrôleur central (6) du premier module (1A) et le contrôleur central (6) du deuxième module (1B) communiquent par une liaison (12) pour échanger des données de gestion du système.

9. Le système de conversion d'énergie (10) selon la revendication 8, **caractérisé en ce qu'**il comprend un contrôleur système pour le pilotage global d'une station énergétique comprenant ledit système.

10. Le système de conversion d'énergie (10) selon la revendication 8, **caractérisé en ce qu'**il comprend au moins une armoire ou une baie standardisée configurée pour accueillir un ou plusieurs modules de conversion (1, 1A, 1B, 1C, ...) rackables.

11. Le système de conversion d'énergie (10) selon la revendication 10, **caractérisé en ce qu'**il comprend pour chaque module une carte de fond de panier attachée à l'armoire pour un contrôle de position de chaque module et la détection instantanée d'une déconnexion ou mauvaise connexion d'un module, le contrôleur dudit module s'interconnectant avec la carte de fond de panier pour une communication digitale entre les modules.

12. Le système de conversion d'énergie (10) selon la revendication 8, **caractérisé en ce que** chaque module de conversion (1, 1A, 1B, 1C, ...) est parallélisable avec un ou plusieurs autres modules de conversion (1, 1A, 1B, 1C, ...).

13. Le système de conversion d'énergie (10) selon la revendication 8, **caractérisé en ce que** chaque module de conversion (1, 1A, 1B, 1C, ...) comprend au moins deux ports et de préférence 3 ports ou plus.

14. Le système de conversion d'énergie (10) selon la revendication 8, **caractérisé en ce qu'**il est équipé d'un système de refroidissement à eau ou à air, air forcé ou naturel, le cas échéant de type diphasique avec récupération de chaleur.

15. Le système de conversion d'énergie (10) selon la revendication 8 ou 9, **caractérisé en ce qu'**il couvre une gamme de moyenne puissance comprise entre 5kW et 20MW et de préférence entre 20kW et 200kW.
